## Europäisches Patentamt
## European Patent Office
## Office européen des brevets

(19)

(11) Veröffentlichungsnummer: **0 010 739**
**B1**

(12) **EUROPÄISCHE PATENTSCHRIFT**

(45) Veröffentlichungstag der Patentschrift: **22.06.83**

(51) Int. Cl.³: **C 09 K 3/34, G 02 F 1/00**

(21) Anmeldenummer: **79104146.0**

(22) Anmeldetag: **26.10.79**

(54) **Lichtventil.**

(30) Priorität: **31.10.78 US 956418**

(43) Veröffentlichungstag der Anmeldung:
**14.05.80 Patentblatt 80/10**

(45) Bekanntmachung des Hinweises auf die Patenterteilung:
**22.06.83 Patentblatt 83/25**

(84) Benannte Vertragsstaaten:
**CH DE FR GB IT**

(56) Entgegenhaltungen:
**FR - A - 2 391 766**
**FR - A - 2 391 767**

(73) Patentinhaber: **Research Frontiers Incorporated**
**31 Cain Drive**
**Plainview, New York 11803 (US)**

(72) Erfinder: **Saxe, Robert Leonard**
**19 E. 80th Street**
**New York, N.Y. 10021 (US)**

(74) Vertreter: **Wasmeier, Alfons, Dipl.-Ing.**
**Patentanwälte Dipl.-Ing. A.Wasmeier Dipl.-Ing.**
**H.Graf Postfach 382 Greflinger Strasse 7**
**D-8400 Regensburg 1 (DE)**

Courier Press, Leamington Spa, England.

## Lichtventil

Die Erfindung betrifft ein Lichtventil mit einer eine Suspension lichtpolarisierende Teilchen in einem flüssigen Suspensionsmittel enthaltenden Zelle.

Lichtventile mit Suspensionen von lichtpolarisierenden Teilchen, vorzugsweise von killoidaler Größe, in einer Zelle sind bekannt. Üblicherweise sind bisher suspensionen von Herapathitteilchen in einer geeigneten Flüssigkeit verwendent worden, obwohl auch andere Teilchenarten vorgeschlagen worden sind. Suspensionen von lichtpolarisierenden Teilchen im allgemeinen und mit Herapathit im besonderen sind in der US—PS 1.955.923 beschrieben.

Die in den Lichtventilsuspensionen verwendeten Teilchen sollten eine solche Form besitzen, daß sie bei einer Ausrichtung in der einen Richtung mehr Licht auffangen als bei der Ausrichtung in einer anderen Richtung. Es sind daher nadel-, stab- und bandförmige sowie flockenförmigen Teilchen vorgesehen worden. Obwohl die Art der Teilchen vielfältig sein kann, wie lichtabsorbierend, lichtreflektierend, polarisierend, doppelbrechend, metallisch oder nicht metallisch, wurde dennoch festgestellt, daß lichtpolarisierende Kristalle optisch erwünscht wind, weil eine verhältnismäßig geringe Konzentration derselben in einer Suspension einen verhältnismäßig großen Unterschied der optischen Dichte zwischen aktiviertem und nichtaktiviertem Zustand des Lichtventils herbeiführen kann.

Eine Vielfalt lichtpolarisierender Teilchen sind im Stand der Technik vorgeschlagen worden, jedoch waren die Teilchen stets Perhalogenide eines anorganischen Alkaloidsalzes, wie Herapathit (Chininjodosulfat). Eine größere Auswahl an lichtpolarisierenden Werkstoffen ist jedoch erwünscht, hauptsächlich deshalb, weil die spektralen Eigenschaften der lichtpolarisierenden Teilchen entsprechend ihrer chemischen Zusammensetzung variieren. Somit können neue Arten polarisierender Teilchen die Vielfalt der Farben und spektralen Eigenschaften bei polarisierenden Werkstoffen erhöhen.

Der Erfindung liegt daher die Aufgabe zugrunde, neue lichtpolarisierende Stoffe für Lichtventile anzugeben.

Diese Aufgabe ist erfindungsgemäß dadurch gelöst, daß die Teilchen aus einem Perhalogenid eines Polycarbonsäuresalzes eines Alkaloids d.h. einer organischen Stickstoffbase bestehen.

Die Erfindung schlägt Lichtventile vor, die eine Teilchensuspension eines lichtpolarisierenden Halogenids des Salzes eines Alkaloids einer Polycarbonsäure verwenden, wobei die Polycarbonsäure—falls erforderlich—eine oder mehrere Hydroxylgruppen enthält. Diese Teilchen besitzen eine andere Farbe und/oder andere spektrale Eigenschaften als die bekannten anorganischen Halogenidsalze. Die Ausdruck "Alkaloid" wird hier benutzt, um organische Stickstoffbasen zu bezeichnen, wie sie. in Hackh's Chemical Dictionary, 4. Auflage, McGraw-Hill Book Company, New York, 1969 definiert sind.

Der Polycarbonsäureanteil am lichtpolarisierenden Werkstoff ist eine aromatische, aliphatische oder cycloaliphatische organische Säure, die wenigstens zwei Carboxylgruppen besitzt. Die Polycarbonsäure kann ebenfalls—falls erforderlich—eine oder mehrere Hydroxylgruppen besitzen. Die Polycarbonsäure besitzt vorzugsweise zwei bis sechs Carboxylgruppen und null bis sechs Hydroxylgruppen. Vorzugsweise ist die Polycarbonsäure symmetrisch. In der Praxis wird die Polycarbonsäure aus den leicht verfügbaren ausgewählt werden, wie aliphatischen, cycloaliphatischen oder aromatischen Polycarbonsäuren mit bis zu 25 Kohlenstoffatomen, 2-4 Carboxylgruppen und 0—6 Hydroxylgruppen, jedoch kann jede Polycarbonsäure verwendet werden, wenn deren Moleküle, einschließlich der ersetzten Gruppen, in der gewünschten Weise die spektralen Eigenschaften des Halogenidkristalls und/oder die Löslichkeit des Polycarbonsäuresalzes des Alkaloids oder des Perhalogenids verändert.

Brauchbare Polycarbonsäuren sind polyalkane Säuren, wie Oxal-, Malon-, Bernstein-, Glutar-, Adipin-, Pimelin-, Suberin-, Azelain- und Sebacinsäure; polyalkene Säuren, wie Fumar-, Malein-, Mesacon-, Glutacon-, Itacon-, Mucon und Aconitsäure; hydroxypolyalkane und hydroxypolyalkene Säuren, wie Malat-, Wein-, Zitronensäure, und durch die Oxidation von Monosacchariden erhaltene Säuren, wie Mucin-, Trihydroxyglutar- und Xylylenecarbonsäure und dgl., sowie aromatische Polycarbonsäuren, wie Terephthal-, Pyromellit- und Naphthalindicarbonsäure.

Der Alkaloidteil an dem lichtpolarisierendem Werkstoff kann ein Alkaloid sein welches dazu verwendet wurde, um lichtpolarisierende Halogenide alkalischer anorganischer Salze herzustellen (siehe US—PS 2.176.516). Das Alkaloid ist vorzugsweise ein Chininalkaloid. Anorganische Chininalkaloidsalze sind in den US—PS 1.951.664, 2.178.996 und 2.289.712 beschrieben und alle darin beschriebenen Alkaloide können bei der Erfindung verwendet werden.

Brauchbare Alkaloide sind auch heterozyklische organische Stickstoffbasen, wie Pyridin, Picolin, Diphenyloxazol, Chinolin und Chinaldin, Chinin, Cinchonidin, Hydrocinchonidin, Hydrocinchonin und andere Chininalkaloide, sowie Toluidin und dgl.

Viele der Alkaloidsalze sind ohne Schwierigkeit erhältlich, wie Chininbitartrat, Oxalat, Succinat und Tartrat, Koeffeincitrat und Cinchonidintartrat. Falls es nicht erhältlich ist, kann das benötigte Polycarbonsalz in einfacher Weise durch Reaktion des Alkaloids und der Polycarbonsäure in einer Säure-Base-Reaktion hergestellt werden.

Die Herstellung des lichtpolarisierenden Perhalogenids des Alkaloidsalzes ist bekannt. Sie erfolgt durch die Reaktion des Alkaloidsalzes mit einer Mischung von elementarem Jod und Halogenwasserstoffsäure oder Ammonium- oder Metallhalogenid oder einer Mischung derselben in einem geeigneten Lösungsmittel, wie Alkohol oder Ätheralkohol (vgl. US—PS 1.951.664, 2.176.516 und 2.289.712). Das Halogenid ist normalerweise ein Jodid, es kann aber auch ein Bromid oder ein Chlorid sein. Vorzugsweise findet die Reaktion zur Bildung des Perhalogenids in Anwesenheit eines Schutzkolloids, wie Nitrozellulose oder eines Copolymers, statt. Die lichtpolarisierenden Werkstoffe für das erfindungsgemäße Lichtventil werden auf die gleich Weise durch Reaktion des Polycarbonsäuresalzes des Alkaloids mit Jod und dem Halogenid hergestellt.

Nach der Herstellung der lichtpolarisierenden Halogenidteilchen werden sie in einem flüssigen Dispergens suspendiert. Das flüssige Dispergens kann—wie bekannt—irgendeine Flüssigkeit mit geringer elektrischer Leitfähigkeit sein, solange sie nur die lichtpolarisierenden Teilchen suspendiert und den polymeren Stabilisator löst. Ester, Nitrobenzol, Öl und andere Flüssigkeiten sind als flüssiges Dispergens bekannt geworden (siehe US—PS 1.951.664 und 2.290.582). Das flüssige Dispergens besitzt vorzugsweise eine niedrige elektrische Leitfähigkeit und einen niedrigen Dampfdruck, es zersetzt sich nicht und greift die Teilchen oder andere Bestandteile der Suspension nicht an. Als Dispergens geeignete organische Ester enthalten Isopentylacetat, Dioctylphthalat, Diisodecyladipat, Para-nonylphenylacetat und Dioctylsebacat. Als Bestandteil des Dispergens können Flüssigkeiten, die das stabilisierende Polymer nicht lösen, verwendet werden, wenn sie das Polymer nicht ausfällen. Es ist wichtig, daß das stabilisierende Polymer gut gelöst ist, wenn es im Lichtventil verwendet wird.

Um die Stabilität der Suspension zu unterstützen wird ein Schutzkolloid verwendet, das eine Agglomeration oder Sedimentation verhindert. Wie an sich bekannt, sind die Teilchen sehr klein, vorzugsweise kollodial.

Es ist bekannt, sowohl elektrische als auch magnetische Felder zum Ausrichten der Teilchen in einem Lichtventil zu verwenden, obwohl electrische Felder üblich sind. Zur Erzeugung des elektrischen Feldes sind auf einander gegenüberliegenden Wänden des Lichtventils elektrisch leitfähige Flächenelektroden vorgesehen, welche an eine elektrische Spannung angelegt werden können. Die Elektroden können dünne transparente elektrische leitfähige Schichten auf den Innenflächen der Vorder- und Rückwand des Lichtventils sein. Auf diese Weise stellen sie ein sogenanntes ohmisches Lichtventil dar, weil die Elektroden mit der flüssigen Suspension in Berührung sind. Es ist auch bekannt, die Elektroden mit einer dünnen Schicht aus einem transparenten Werkstoff, wie Glas, zu beschichten, um die Elektroden zu schützen. Derartige dünne Glasschichten bilden dielektrische Schichten zwischen den Elektroden und der flüssigen Suspension; diese Anordnungen werden daher als kapazitive Lichtventile bezeichnet. Man kann eine Gleichspannung, eine Wechselspannung oder impulsförmige Spannungen an die Elektroden anlegen, um die Teilchen in der Suspension auszurichten. Wird die Spannung abgeschaltet, dann kehren die Teilchen wegen der Brown'schen Bewegung zu einer Zu fallsverteilung zurück.

Üblicherweise sind die Vorder- und Rückseite des Lichtventils transparent, beispielsweise Glasoder Kunststoffscheiben. Wenn kein Feld angelegt und eine zufällige Verteilung der Teilchen vorhanden ist, besitzt das Lichtventil eine niedrige Durchlässigkeit für Licht, es befindet sich im geschlossenen Zustand. Wird ein Feld angelegt, dann werden die Teilchen ausgerichtet, das Lichtventil ist geöffnet und lichtdurchlässig.

Anstatt die Rückwand transparent auszubilden kann sie auch reflektierend ausgebildet oder eine reflektierende Schicht hinter ihr angeordnet sein. In einem solchen Fall wird das Licht absorbiert, wenn das Lichtventil nicht eingeschaltet ist, und reflektiert, wenn das Lichtventeil eingeschaltet ist. Diese prinzipielle Wirkungsweise kann dadurch abgewandelt werden, daß anstelle lichtabsorbierender Teilchen lichtreflektierende Teilchen verwendet werden.

Die Efindung wird nun durch die nachstehenden Beispiele erläutert. Alle Bestandteile und Mengen sind—sofern nichts anderes angegeben ist—in Gewicht angegeben.

Beispiel 1
Chininterephthalatperjodid

Lösung A
    3,75 g  Chininterephthalat
  20,00 g  2-Äthoxyäthanol

Lösung B
  10,00 g  Trikresylphosphat
  42,52 g  331/3 %ige Lösung von Nitrozellulose in 2-Äthoxyäthanol. Die Nitrozellulose ist eine
           50/50 %ige Mischung eines niedrigviskosen (18,6 cps) und eines hochviskosen (17
           Sek.) Anteils.
    0,25 g  $H_2SO_4$ (97%), als Katalysator
Lösung A und B werden zur Herstellung der Lösung C miteinander gemischt.

Lösung D
    0,49 g  $CaI_2$ (Kalziumjodid)
  12,00 g  n-Propanol

**0010739**

3,04 g I$_2$ (Jod)
35,00 g Trikresylphosphat
15 Minuten kräftig schütteln.

Lösung C und Lösung D werden unter kräftigem Umrühren miteinander gemischt. Innerhalb weniger Minuten bildet sich das Produkt. Dieses enthält eine sehr große Anzahl extrem kleiner Chininterephthalatperjodid-Teilchen, einer feuchten Paste.

Das Trocknen erfolgt durch Verteilen der feuchten Paste als Film von etwa 12 μm Stärke auf einer Glasplatte bei Umgebungstemperatur, sodaß die flüchtigen Bestandteile der feuchten Paste verdunsten, bis kein bedeutsamer Geruch mehr wahrnehmbar ist (nach etwa drei Stunden). Das dabei erhaltene Produkt wird als trockene Paste bezeichnet. Die Verwendung von Trikresylphosphat, einem Weichmacher mit hohem Siedepunkt, ist wahlweise. Jedoch kann seine Verwendung das Verteilen der feuchten Paste und das nachfolgende Dispergieren der trockenen Paste in einem Dispergens erleichtern.

Beispiel 2

Beispiel 1 wird wiederholt, ausgenommen daß Chininterephthalat durch Chininpyromellitat ersetzt ist.

Beispiel 3

Beispiel 1 wird wiederholt, ausgenommen daß Chininterephthalat durch Chininmucat ersetzt ist.

Perjodidkristalle der Beispiel 1, 2 und 3 werden unter dem Mikroskop geprüft, um die Farbe der Kristalle zu beobachten und die Farbe und Qualität der Bereiche festzustellen, wenn die Kristallachsen gekreuzt sind. Zum Vergleich werden Herapathit—und Chininbisulfatperjodidkristalle in gleicher Weise beobachtet. Die Ergebnisse sind in der nachstehenden Tabelle 1 zusammengefaßt.

TABELLE 1

| Kristalle | | Farbe | Qualität |
| --- | --- | --- | --- |
| Chininterephthalatperjodid | rot-braun | grau | gut |
| Chininpyromellitatperjodid | rot-braun | grau | gut |
| Chininmucatperjodid | durchschenend | schwarz | ausgezeichnet |
| Chininbisulfatperjodid | fast transparent | blauschwarz | sehr gut |

Herstellung des Ausgangswerkstoffes

A. Chininterephthalat

Vier Gramm Chinin werden unter Wärmezufuhr in 100 cm n-Propanol zur Bildung der Lösung I gelöst. 1,7 g Terephthalsäure und 50 g H$_2$O werden zu einer Aufschlämmung gemischt, die mit der Lösung I bei 75°C gemischt wird. Die Mischung wird bis zum Kochen erhitzt, 10 Minuten in diesem Zustand gehalten und danach auf Raumtemperatur abgekühlt. Das Reaktionsprodukt wird gefiltert und der Kuchen in Aceton gewaschen. Ertrag: 4,28 g federartige weiße Kristalle. Schmelzpkt. 242°C (Zersetzung).

B. Chininpyromellitat

Vier Gramm Chinin, 2,6 g Pyromellitsäure und 50 g H$_2$O werden unter Rühren und Erhitzen auf 80°C miteinander gemischt. Es werden 310 ccm Aethanol und 5 ccm n-Propanol hinzugefügt und die Mischung etwa 30 Minuten auf 70—80°C gehalten. Das Reaktionsprodukt wird heiß gefiltert und 3,62 g eines trockenen Kuchens erzielt. Schmelzbereich bei etwa 220°C.

C. Chininmucat

Eine Mischung aus 38 g Chinin, 22,2 g Mucinsäure und 600 g H$_2$O wird auf 95°C erhitzt (pH=5,0). Die Mischung wird während 15 Minuten bei 95—98°C gehalten, bis alle Feststoffe gelöst sind und dann heiß gefiltert. Das Filtrat wird während 12 Stunden auf 0° bis 5°C abgekühlt und dann gefiltert. Der Kuchen wird in Aceton gewaschen und dann getrocknet. Ertrag: 25,65 g weiße bis leicht lederfarbene Kristalle. Schmelzbereich: 202 bis 204°C.

Beispiel 4

Beispiel 1 wird wiederholt, ausgenommen daß Chininterephthalat durch Hydrocinchonidinterephthalat ersetzt wird und zur Lösung A 10 g H$_2$O hinzugefügt werden.

Beispiel 5

Beispiel 1 wird wiederholt, ausgenommen daß Chininterephthalat durch Hydrocinchonidinpyromellitat ersetzt wird und zur Lösung A 10 g H$_2$O hinzugefügt werden.

4

Beispiel 6

Beispiel 1 wird wiederholt, ausgenommen daß Chininterephthalat durch Hydrocinchonidinmucat ersetzt wird und zur Lösung A 10 g H$_2$O hinzugefügt werden.

Hydrocinchonidinterephthalat, —pyromellitat und—mucat werden wie unter "Herstellung des Ausgangswerkstoffes" beschrieben hergestellt, indem Chinin durch Hydrocinchonidin ersetzt wird.

Beispiel 7

Die trockene Paste zus deh Beispielen 1 bis 6 wird in Dioctylsebacat als Dispergens in einem Mischungsverhältnis von einem Teil trockener Paste und zwei Teilen Dioctylsebacat bei zehnstündiger Ultraschallbehandlung in einem Bransonic 32 Ultraschallmischer (Branson Instrument Co. Stamford, Conn.) dispergiert. Mit der so erhaltenen Suspension werden Lichtventile gefüllt.

In den Beispielen 1, 2 und 3 wurde Kalziumjodid verwendet, weil—wie bevorzugt—die lichtpolarisierenden Teilchen extrem klein hergestellt werden können. Es besteht jedoch ein große Auswahl' an anderen, gleichfalls verwendbaren Jodiden, wie Kaliumjodid, Ammoniumjodid, Rubidiumjodid, Caesiumjodid u. dgl. Der Ersatzt von Kalziumjodid durch andere Jodide erfolgt in jodidaequivalenten Mengen.

Das als lichtpolarisierender Werkstoff verwendete Halogenid kann ein Chlorid, Bromid, Jodid oder eine Mischung derselben sein. Der Ersatz von Jodatomen durch Bromatome führt zu einer Veränderung der spektralen Eigenschaften der erzielten lichtpolarisierenden Teilchen indem die Farbe Dunkelblau für ein Perjodid zu rot-braun für Perbromid verschoben wird, wobei Zwischenfarben bei Teilchen auftreten, die eine Kombination von Brom und Jodatomen enthalten. Der verwendete Ausdruck Perhalogenid schließt solche Kombination mit ein.

Der Ersatz einer Polycarbonsäure durch eine andere bei der Herstellung eines bestimmten Perhalogenid-Lichtpolarisierenden Teilchens beeinflußt die spektralen Absorptionsund Transmissionseigenschaften der Teilchen, weil jeder Bestandteil einen Beitrag zur Gesamtheit der Eigenschaften liefert. Jedoch ist die Auswirkung in der Regel wesentlich geringer als diejenige, die durch einen Wechsel der Halogenart bei den Teilchen hervorgerufen wird.

Ein wichtiger Vorteil, der durch die Verwendung eines Alkaloidpolycarbonsalzes bei der Herstellung von Perhalogeniden eintritt, ist die Möglichkeit die Löslichkeit des Alkaloidsalzes durch den Einbau von Alkyl-, aromatischer und/oder anderer Gruppen in die Polycarbonsäure und damit in das Alkaloidsalz genau zu dosieren. Die Bedeutung ist davon abhängig, ob man die Halogenumsetzung des sauren Salzes mit Halogen und Halogenid zu Perhalogenidteilchen in Wasser oder in einem nichtwässrigen Mittel oder einer Kombination derselben durchführen will. Es hat sich jedoch herausgestellt, daß es am bequemsten ist, wenn man die Reaktion in einem nichtwässrigen Mittel oder in einer Mischung eines solchen Mittels mit einem geringeren Wasseranteil ausführt. Die Begründung dafür liegt in der Tatsache daß man üblicherweise die Halogenreaktion in Gegenwart eines geeigneten polymeren Stabilisators durchführen möchte, um die mittlere Teilchengröße klein zu halten und die Neigung zur Agglomeration zu vermindern. Da das Polymer zusammen mit den Teilchen in dem endgültigen Dispergens verbleibt, wie in den Beispielen 1 bis 7 beschreiben, ist es wichtig, daß das Polymer in beiden, nämlich dem Halogenreaktionslösungsmittel und dem flüssigen Dispergens löslich ist. Da es ziemlich schwierig ist, ein geeignets Polymer zu finden, das in beiden, nämlich in Wasser und weitestgehend auch in niederpolaren Flüssigkeiten löslich ist, wird ein in Alkohol oder ein Ätheralkohol lösliches Alkaloidsalz bevorzugt, damit die Löslichkeitsanforderungen an das Polymer besser erfüllt werden können. Mit den vorgeschlagenen Mitteln können die Löslichkeitsanforderungen leicht erfüllt werden.

**Patentansprüche**

1. Lichtventil mit einer eine Suspension lichtpolarisierender Teilchen in einem flüssigen Suspensionsmittel enthaltenden Zelle, dadurch gekennzeichnet, daß die Teilchen aus einem Perhalogenid eines Polycarbonsäuresalzes eines Alkaloids d.h. einer organischen Stickstoffbase bestehen.

2. Lichtventil nach Anspruch 1, dadurch gekennzeichnet, daß die Polycarbonsäure eine aromatische, aliphatische oder zykloaliphatische organische Säure mit wenigstens zwei Carboxylgruppen ist.

3. Lichtventil nach Anspruch 2, dadurch gekennzeichnet, daß die Polycarbonsäure wenigstens eine Hydroxylgruppe enthält.

4. Lichtventil nach Anspruch 2, dadurch gekennzeichnet, daß die Polycarbonsäure zwei bis sechs Carboxyl- und null bis sechs Hydroxylgruppen besitzt.

5. Lichtventil nach Anspruch 2, dadurch gekennzeichnet, daß die Polycarbonsäure symmetrisch aufgebaut ist.

6. Lichtventil nach Anspruch 2, dadurch gekennzeichnet, daß die Polycarbonsäure bis zu 25 Kohlenstoffatome mit zwei bis vier Carboxyl- und null bis sechs Hydroxylgruppen enthält.

7. Lichtventil nach Anspruch 1, dadurch gekennzeichnet, daß die Polycarbonsäure aus der Gruppe von Oxal-, Malon-, Bernstein, Glutar-, Adipin-, Pimelin-, Suberin-, Azelain-, Sebacin-, Fumar-, Malein-, Mesacon-, Glutacon-, Itacon-, Mucon-, Aconit-, Malat-, Wein-, Zitronen-, Mucin-, Trihydroxyglutar-, Xylylencarbon-, Terephthal-, Pyromellit- und Naphthalindicarbon Säure ausgewählt ist.

8. Lichtventil nach Anspruch 1, dadurch gekennzeichnet, daß das Perhalogenid Cinchonidin-

5

**0 010 739**

terephthalat, Perjodid, Cinchonidinpyromellitatperjodid, Cinchonidinmucatperjodid, Chininterphthalatperjodid, Chininpyromellitatperjodid oder Chininmucatperjodid ist.

9. Lichtventil nach Anspruch 1, dadurch gekennzeichnet, daß das Alkaloid eine heterocyclische organische Stickstoffbase ist.

10. Lichtventil nach Anspruch 1, dadurch gekennzeichnet, daß das Alkaloid aus der Gruppe von Pyridin, Picolin, Diphenyloxazol, Chinolin, Chinaldin, Coffein und Toluidin ausgewählt ist.

11. Lichtventil nach Anspruch 9, dadurch gekennzeichnet, daß das Alkaloid ein Chininalkaloid ist.

12. Lichtventil nach Anspruch 1, dadurch gekennzeichnet, daß das Alkaloid aus der Gruppe von Chinin, Cinchonidin, Hydrocinchonidin und Hydrocinchonin ausgewählt ist.

## Claims

1. A light valve, comprising a cell containing a suspension of light-polarizing particles in a liquid suspending medium, characterized in that said particles are of a light-polarizing perhalide of a polycarboxylic acid salt of an alkaloid, i.e. an organic nitrogenous base.

2. The light valve according to claim 1, characterized in that said polycarboxylic acid is an aromatic, aliphatic or cycloaliphatic organic acid having at least two carboxylic acid groups.

3. The light valve according to claim 2, characterized in that polycarboxylic acid contains at least one hydroxy group.

4. The light valve according to claim 2, characterized in that said polycarboxylic acid has two to six carboxylic acid groups and zero to six hydroxy groups.

5. The light valve according to claim 2, characterized in that said polycarboxylic acid is symmetrical.

6. The light valve according to claim 2, characterized in that said polycarboxylic acid contains up to 25 carbon atoms with 2—4 carboxylic acid groups and 0—6 hydroxy groups.

7. The light valve according to claim 1, characterized in that said polycarboxylic acid is selected from the group of oxalic, malonic, succinic, glutaric, adipic, pimelic, suberic, azelaic, sebacic, fumaric, maleic, mesaconic, glutaconic, itaconic, muconic, aconitic, malic, tartaric, citric, mucic, trihydroxyglutaric, xylonic, terephthalic, pyromellitic, and naphthyl dicarboxylic acid.

8. The light valve according to claim 1, characterized in that said light polarizing perhalide is cinchonidine terephthalate periodide, cinchonidine pyromellitate periodide, cinchonidine mucate periodide, quinine terephthalate periodide, quinine pyromellitate periodide, or quinine mucate periodide.

9. The light valve according to claim 1, characterized in that said alkaloid is a heterocyclic organic nitrogen base.

10. The light valve according to claim 1, characterized in that said alkaloid is selected from the group of pyridine, picoline, diphenyl oxazole, quinoline, quinaldine, caffeine and toluidine.

11. The light valve according to claim 9, characterized in that said alkaloid is a quinine alkaloid.

12. The light valve according to claim 11, characterized in that said quinine alkaloid is selected from the group of quinine, cinchonidine, hydrocinchonidine, and hydrocinchonine.

## Revendications

1. Valve de lumière, comprenant une cellule contenant une suspension de particules polarisant la lumière, dans un millieu de suspension liquide, caractérisée par le fait que lesdites particules sont en un perhalogénure, polarisant la lumière, d'un sel d'acide polycarboxylique et d'un alcaloïde, c'est-à-dire une base azotée organique.

2. Valve de lumière selon la revendication 1, caractérisée par le fait que le dit acide polycarboxylique est un acide organique aromatique, aliphatique ou cycloaliphatique, ayant au moins deux groupes acide carboxylique.

3. Valve de lumière selon la revendication 2, caractérisé par le fait que ledit acide polycarboxylique contient au moins un groupe hydroxy.

4. Valve de lumière selon la revendication 2, caractérisée par le fait que ledit acide polycarboxylique possède deux à six groupes acide carboxylique et zéro à six groupes hydroxy.

5. Valve de lumière selon la revendication 2, caractérisée par le fait que ledit acide polycarboxylique est symétrique.

6. Valve de lumière selon la revendication 2, caractérisée par le fait que ledit acide polycarboxylique contient jusqu'à 25 atomes de carbone avec 2—4 groupes acide carboxylique et 0—6 groupes hydroxy.

7. Valve de lumière selon la revendication 1, caractérisée par le fait que ledit acide polycarboxylique est choisi dans le groupe des acides oxalique, malonique, succinique, glutarique, adipique, pimélique, subérique, azélaïque, sébacique, fumarique, maléique, mésaconique, glutaconique, itaconique, muconique, aconitique, malique, tartrique, citrique, mucique, trihydroxyglutarique, xylonique, téréphthalique, pyromellitique et naphtyldicarboxylique.

8. Valve de lumière selon la revendication 1, caractérisée par le fait que ledit perhalogénure

6

polarisant la lumière est un périodure de cinchonidine téréphtalate, cinchonidine pyromellitate, cinchonidine mucate, quinine téréphtalate, quinine pyromellitate ou quinine mucate périodure.

9. Valve de lumière selon la revendication 1, caractérisée par le fait que ledit alcaloïde est une base azotée organique hétérocyclique.

10. Valve de lumière selon la revendication 1, caractérisée par le fait que ledit alcaloïde est choisi dans le groupe des pyridine, picoline, diphényloxazole, quinoline, quinaldine, caféine et toluidine.

11. Valve de lumière selon la revendication 9, caractérisée par le fait que ledit alcaloïde est un alcaloïde de quinine.

12. Valve de lumière selon la revendication 11, caractérisée par le fait que ledit alcaloïde de quinine est choisi dans le groupe des quinine, cinchonidine, hydrocinchonidine et hydrocinchonine.